# EUROPEAN PATENT SPECIFICATION

(11) **EP 2 758 757 B1**
(45) Date of publication and mention of the grant of the patent: **19.10.2016**
(21) Application number: 12834158.3
(22) Date of filing: 17.09.2012
(51) Int. Cl.: G01F 25/00, G01F 3/14

(54) **SMALL VOLUME PROVER APPARATUS AND METHOD FOR MEASURING FLOW RATE**
GERÄT ZUM PRÜFEN VON KLEINEN VOLUMEN UND VERFAHREN ZUR MESSUNG VON STRÖMUNGSDURCHFLÜSSEN
APPAREIL DE TEST DE PETIT VOLUME ET PROCÉDÉ DE MESURE DE DÉBIT

(30) Priority: 21.09.2011 US 201113238171
(43) Date of publication of application: 30.07.2014
(73) Proprietor: Honeywell International Inc., Morris Plains, NJ 07950 (US)
(72) Inventor: LARSEN, Christopher Scott, Morristown, New Jersey 07962-2245 (US)
(74) Representative: Houghton, Mark Phillip
(86) International application number: PCT/US2012/055704
(87) International publication number: WO 2013/043523

(56) References cited:
- JP-A- 2001 289 626
- US-A- 4 152 922
- US-A- 5 974 971
- US-A1- 2001 037 689
- US-A1- 2006 201 244
- US-A1- 2007 137 285
- US-A1- 2007 137 285
- Diane Lee: "June 2005 Part 2 - Small Volume Provers History, Design, and Operation", , 30 June 2005 (2005-06-30), XP055178229, Retrieved from the Internet: URL:http://www.nist.gov/pml/wmd/pubs/uploa d/H-004.pdf [retrieved on 2015-03-20]

## Description

### TECHNICAL FIELD

Embodiments are generally related to flow meter proving systems and methods. Embodiments are also related to small volume provers and methods thereof. Embodiments are additionally related to accelerometer sensors. Embodiments are further related to the measurement of the flow rate of a fluid.

### BACKGROUND OF THE INVENTION

Meter provers and flow proving components allow a known traceable volume to simulate actual operating conditions and to test and verify the performance of flow meters. A SVP (Small Volume Prover) or piston prover can be employed to accurately (e.g. 0.02% tolerance) measure flow in a fluid flow process and to calibrate the flow measurement device employed in a custody transfer (e.g., pipe lines, etc.). Small volume provers generally include a precisely honed cylinder with sensors positioned at key locations for detecting the beginning and ending of a piston stroke. The volume of the stroke can then be employed to verify the volume measured by the device under test.

Conventional small volume provers for calibrating a liquid flow sensor with respect to the measurement of a fixed volume typically utilize a pair of fixed position optical slot detectors located on the stationary frame of the small volume prover and a flag mounted to the piston shaft that passes through these optical slot sensors. Such small volume provers can measure the piston velocity based on the amount of time (e.g., a time difference) it takes for a prover shaft flag to pass through these two optical sensors. Unfortunately, such optical sensors are difficult to align and require very precise placement, which adds cost and complexity to the prover manufacture and installation. Also, if such sensors are misaligned, the moving shaft may hit and destroy the sensors. Additionally, such optical sensors are typically mounted to a metal bar and the distance between the optical sensors is dependent on the temperature of the bar. Hence, a temperature sensor, a transmitter, and a compensation algorithm must be added to the prover apparatus, which adds another degree of complexity and cost. Furthermore, such optical sensors measure average velocity without actually taking into account the acceleration profile, which can result in inaccurate data collection and poor performance.

Based on the foregoing, it is believed that a need exists for an improved small volume prover apparatus and method for measuring flow rate. A need also exists for an improved accelerometer sensor that accurately measures the velocity of a piston traveling in a pipe, as will be described in greater detail herein.

Diane Lee: "June 2005 Part 2 - Small Volume Provers History, Design, and Operation", 30 June 2005 (2005-06-30), XP055178229, discloses a prover comprising a precision bore chamber having a known volume and housing a piston and the poppet valve. The latter (also called a flow-through valve), when open, allows product to flow through.

### BRIEF SUMMARY

The present invention provides a small volume prover apparatus according to claim 1 of the appended claims.

The invention further provides a method for measuring a flow of fluid according to claim 7 of the appended claims.

The following summary is provided to facilitate an understanding of some of the innovative features unique to the disclosed embodiments and is not intended to be a full description. A full appreciation of the various aspects of the embodiments disclosed herein can be gained by taking the entire specification, claims, drawings, and abstract as a whole.

It is, therefore, one aspect of the disclosed embodiments to provide for improved meter proving systems and methods.

It is another aspect of the disclosed embodiments to provide for an improved small volume prover apparatus and method for measuring flow rate.

It is a further aspect of the disclosed embodiments to provide for an improved accelerometer sensor for accurately measuring the velocity of a piston traveling in a cylindrical object such as, for example, a pipe.

The aforementioned aspects and other objectives and advantages can now be achieved as described herein. A small volume prover apparatus and method for precisely measuring the flow rate of a fluid via a pipe is disclosed herein. The apparatus includes a precision bore cylinder and a piston configured with a valve arrangement in order to permit fluid to pass through an annular passage when the piston is traveling from one (e.g. downstream) position to an opposite (e.g. upstream) position. An accelerometer sensor can be mounted to the piston for continuously sensing the velocity of the piston traveling in the precision bore cylinder (e.g., a pipe, a flow tube, etc.) by integrating the acceleration data with respect to time. The volumetric flow rate can be calculated by multiplying the velocity with respect to the area of the flow tube.

A processor configured in association with the apparatus can be employed to calibrate the fluid flow utilizing a double chronometry pulse interpolation approach, which also provides fractional meter pulse counting. The accelerometer sensor
3a transmits two time pulse signals that correspond to the velocity measured by the integration of the acceleration data to the processor. The accelerometer can be mounted on the piston and external to the fluid flow if the piston exits the prover apparatus. The accelerometer can also be mounted within the fluid flow. The acceleration data can be transmitted to the processor via, for example, wired, wireless, or optical communication techniques.

Temperature compensation of the thermal expansion of the bore as affected by the fluid temperature can be performed by a temperature monitoring and compensation algorithmic unit located within the accelerometer sensor if the accelerometer sensor is located inside the bore cylinder and in direct contact with the fluid. A proving run can be initiated via the processor, which provides and processes instructions for pulling the piston into an upstream position. The piston can then be unlatched from, for example, a chain drive return mechanism. The low-drag piston traveling down the tube is free to follow the flow of the fluid with the least possible effect on the flow stream. When the piston is released, the flow-through valve closes by a spring tension and the piston velocity is synchronized with the fluid velocity.

A pulse signal can be transmitted to the processor to initiate a timing sequence when the accelerometer sensor is actuated and after the piston has been released and synchronized with the fluid flow. Upon attaining the end, another pulse signal can be transmitted to the processor to stop the timing sequence. The fluid pressure in the apparatus pushes the perimeter of the piston further downstream, opening the flow-through valve, thereby permitting the flow to continue with little to no pulsation or surge in line pressure. The piston travels at the same rate of the liquid and starts the accelerometer sensor data acquisition in order to determine a measure of flow rate.

The piston travels in one axis and the velocity is monotonically increased in a relatively predictable fashion. The accelerometer sensor can calculate the piston velocity without alignment and temperature sensitivity issues. The variation in the flow velocity can be sensed by the accelerometer sensor in order to verify the accuracy of the flow meter upstream or downstream in the fluid flow and an alarm signal can be provided if the velocity varies throughout the piston travel.

### BRIEF DESCRIPTION OF THE DRAWINGS

The accompanying figures, in which like reference numerals refer to identical or functionally-similar elements throughout the separate views and which are incorporated in and form a part of the specification, further illustrate the present invention and, together with the detailed description of the invention, serve to explain the principles of the present invention.
FIG. 1 illustrates a block diagram of a small volume prover apparatus associated with an accelerometer sensor mounted on a piston outside fluid flow, in accordance with an embodiment;
FIG. 2 illustrates a block diagram of a small volume prover apparatus associated with the accelerometer sensor mounted on a piston inside fluid flow, in accordance with another embodiment;
FIG. 3 illustrates a schematic diagram of the small volume prover apparatus associated with an accelerometer sensor, in accordance with the disclosed embodiments; and
FIG. 4 illustrates a high level flow chart of operation illustrating logical operational steps of a method for precisely measuring the flow rate of a fluid via a pipe utilizing the accelerometer sensor, in accordance with the disclosed embodiments.

### DETAILED DESCRIPTION

The particular values and configurations discussed in the examples can be varied and are cited to illustrate at least one embodiment.

The embodiments now will be described more fully hereinafter with reference to the accompanying drawings, in which illustrative embodiments of the invention are shown. The embodiments disclosed herein can be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout. As used herein, the term "and/or" includes any and all combinations of one or more of the associated listed items.

The terminology used herein is for the purpose of describing particular embodiments. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

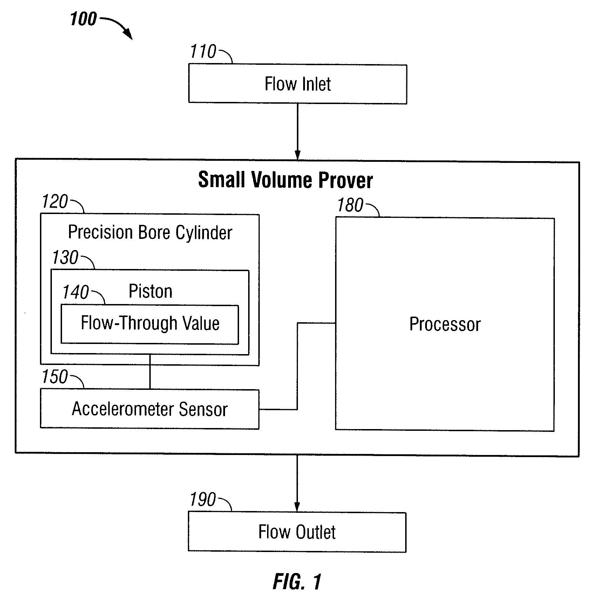

FIG. 1 illustrates a block diagram of a small volume prover apparatus 100 that communicates an accelerometer sensor 150 mounted on a piston 130 external to a fluid flow, in accordance with the disclosed embodiments. The small volume prover apparatus 100 can function based on a simple mechanical operation with no hydraulics or pneumatics. The apparatus 100 provides a constant temperature with respect to the fluid stream and maintains a constant base volume of a measuring conduit by minimizing a differential pressure of fluids in and around the measuring conduit. The apparatus 100 can utilize an electronic pulse-counting technique such as, for example, a double chronometry operation for calibrating the flow rate of a fluid.

The apparatus 100 generally includes a precision bore cylinder 120 (e.g., a flow tube) having a flow inlet 110 and a flow outlet 190. The precision bore cylinder 120 can maintain and house a piston 130 configured with a flow-through valve arrangement 140 in order to permit fluid to pass through an annular passage when the piston 130 travels from one position to an opposite position. Note that the piston 130 is preferably a low-drag piston. Note also that in some embodiments the precision bore cylinder 120 may form a part of a pipeline or can be provided in the shape of a pipe. The precision bore cylinder 120 has a known volume, which can be verified utilizing a water draw procedure. The precision bore cylinder 120 can function as the measurement chamber of the apparatus 100.

The accelerometer sensor 150 can be mounted on the piston 130 for continuously detecting the velocity of the piston 130 by integrating the acceleration of the piston 130 as it moves between the two positions (e.g., a first position and a second position, one position and an opposite position, etc.). Note that the accelerometer sensor 150 can be mounted on the piston 130 external to the fluid flow if a component of the piston or shaft exits the prover apparatus 100, as illustrated in FIG. 1.

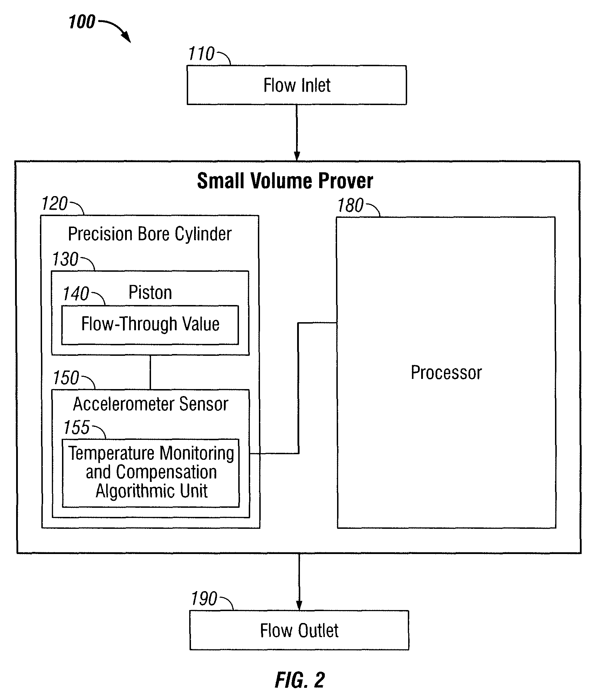

FIG. 2 illustrates a block diagram of the apparatus 100, in accordance with another embodiment. In the configuration depicted in FIG. 2, the accelerometer sensor 150 can be mounted within the fluid flow. In general, the accelerometer sensor 150 transmits two time pulse signals, which correspond to the velocity measured by the integration of the acceleration data to a processor 180. It should be noted that the accelerometer sensor 150 does not actually measure time between two positions, but can output two pulses, the time between which corresponds to the velocity measured through integration of the acceleration.

The acceleration data can thus be transmitted to the processor 180 via, for example, wired, wireless, or optical communications techniques. The processor 180 can be configured in association with the apparatus 100 for processing dual chronometry pulse interpolation instructions. The processor 180 can be, for example, a data processing system such as, for example, a simple microprocessor or IC chip, a desktop or laptop computer, a server, networked computing devices, and other processing devices such as pad computing devices (e.g., iPad type devices), and so forth.

The piston 130 can be configured from a material that is appropriate for the prover operating pressure, temperature, and desired resistance to degradation by the fluid that is being metered. In some embodiments, the flow-through valve 140 can be located within the piston 130 that permits fluid to flow through. The valve 140 can be closed when the piston 130 moves from an upstream position to a downstream position. The valve 140 can be opened when the piston 130 moves from the downstream position to the upstream position.

The piston 130 can be positioned and launched via, for example, a chain drive mechanism. In such a chain drive mechanism scenario, a standby mode for the piston 130 can be, for example, the downstream position with the valve 140 open. The chain drive mechanism can pull the piston 130 to the upstream position. The piston 130 is then released and the valve 140 closes to start a proving run. The piston 130 can start the accelerometer sensor 150 data acquisition as it travels the length of the calibrated section (e.g., precision bore cylinder) of the prover apparatus 100. Note that the accelerometer sensor 150 can be employed to measure a change in velocity with respect to time.

The velocity of the piston 130 can be accurately measured by integrating acceleration data with respect to time by utilizing the accelerometer sensor 150. The volumetric flow rate of the fluid can be calculated by multiplying the velocity with respect to the area of a flow tube. In some embodiments, temperature compensation of the thermal expansion of the bore due to changes in fluid temperature can be performed by a temperature monitoring and compensation algorithmic unit 155 located within or maintained by the accelerometer sensor 150 that is located within the bore cylinder 120 and in direct contact with the fluid, as illustrated in FIG. 2. The liquid can be passed through the apparatus 100 until the temperature and pressure are stabilized. Such small volume prover apparatus 100 associated with the accelerometer sensor 150 can be employed for accurate variable volume calibration of, for example, a fluid flow sensor or meter.

Note that there are generally two types of temperature compensation in a prover. The first is the compensation for the thermal expansion of the bar on which the optical sensors for velocity measurement are mounted. Since such a bar does not exist in the design disclosed herein, there is actually not a reason for that type of temperature compensation. The second is the compensation for the thermal volume expansion of the prover vessel (e.g., the bore) itself. The accelerometer sensor 150 could have an integrated temperature measurement for the expansion of the bore, only if the accelerometer sensor 150 is with the bore and in direct contact with the fluid. To summarize, the temperature measurement with respect to FIG. 1 is not necessary because it does not measure the temperature expansion of the bore. However, the configuration of FIG. 2 is useful, but primarily for bore expansion compensation.

It is important to note that proving computers currently in the field cannot currently take in a velocity or even a time. They are programmed to receive pulses when the optical sensors are each triggered and they calculate the time between the two pulses (and ultimately the velocity and flow rate based on preprogrammed distance and volume settings) on their own. To be implemented with this installed infrastructure, this accelerometer sensor 150 can be configured to output two pulses in time that corresponded with the velocity of the piston 130. The accelerometer sensor 150 in this context, however, is not measuring time between two positions, but can output two pulses, the time between which corresponds to the velocity measured through integration of the acceleration.

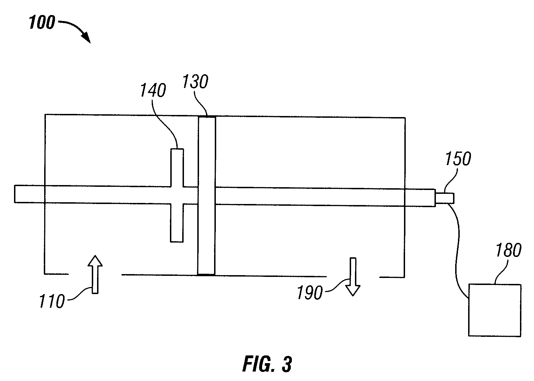

FIG. 3 illustrates a perspective view of the small volume prover apparatus 100 associated with the accelerometer sensor 150, in accordance with the disclosed embodiments. Note that in FIGS. 1-4, identical or similar blocks are generally indicated by identical reference numerals. The precise position of the piston 130 can be monitored via the accelerometer sensor 150. A proving run can be initiated via the processor 180, which processes instructions for pulling the piston 130 into an upstream position. The piston 130 can then be unlatched from, for example, a chain drive return mechanism. The low-drag piston 130 traveling down the cylinder 120, for example, is free to follow the flow of the fluid with the least possible effect on the flow stream. When the piston 130 is released, the flow-through valve 140 closes via a spring tension and the piston velocity is synchronized with the fluid velocity. The accelerometer sensor 150 can be actuated when the piston 130 is released or after a short run.

A pulse signal can be transmitted to the processor 180 to initiate a timing sequence when the accelerometer sensor 150 is actuated after the piston 130 has been released and synchronized with the fluid flow. Upon attaining the end, another pulse signal can be transmitted to the processor 180 to stop the timing sequence. The fluid pressure in the apparatus 100 generally pushes the perimeter of the piston 130 further downstream, opening the flow-through valve 140, thereby permitting the flow to continue with little to no pulsation or surge in line pressure. The piston 130 generally travels at the same rate of the liquid and starts the accelerometer sensor 150 data acquisition in order to determine a measure of flow rate.

Note that the piston 130 can travel in the direction of a single axis and the velocity monotonically increases in a relatively predictable fashion. The accelerometer sensor 150 can take advantage of this piston travel arrangement by calculating the velocity of the piston 130 without alignment and temperature sensitivity issues. The apparatus 100 can also calculate the volumetric flow rate utilizing a double chronometry approach. The double chronometry approach provides fractional meter pulse counting for calibrating the rate of flow of the fluid. The double chronometry approach provides exact time discrimination and pulse counting, which achieves a higher accuracy in calibration of the fluid flow. The measurement of fluid flow, temperature, pressure, and the position of the piston 130 can be determined utilizing the processor 180.

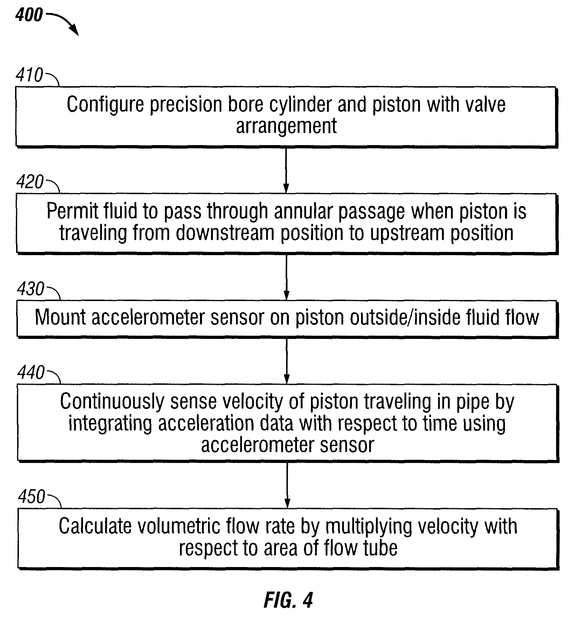

FIG. 4 illustrates a high level flow chart of operations illustrating logical operational steps of a method 400 for providing variable volume calibration utilizing the accelerometer sensor 150, in accordance with the disclosed embodiments. The precision bore cylinder 120 and the piston 130 can be configured with the valve arrangement 140, as illustrated at block 410. A fluid can be permitted to pass through an annular passage when the piston 130 travels from one position to an opposite position, as depicted at block 420. The accelerometer sensor 150 can be mounted on the piston 130 inside/outside fluid flow, as indicated at block 430.

Thereafter, as shown at block 440, the velocity of the piston 130 traveling in the pipe can be continuously detected by integrating the acceleration data with respect to time using the accelerometer sensor 150. The volumetric flow rate can be calculated by multiplying the velocity with respect to the area of the flow tube (e.g., cylinder 120), as shown at block 450.

Such a small volume prover apparatus 100 associated with the accelerometer sensor 150 can be employed for precise and fast position sensing of the piston 130. The variation in the flow velocity can be sensed by the accelerometer sensor 150 in order to verify the accuracy of the flow meter upstream or downstream in the fluid flow and an alarm signal can be provided if the velocity varies throughout the piston travel.

In general, the disclosed embodiments provide for a small volume prover that precisely measures the flow rate of a fluid through a cylindrical component such as a pipe, flow tube, etc., by measuring the velocity of the piston 130 traveling within or through the cylindrical component. The process for such an embodiment involves first dragging the pipe upstream and letting it go, and then letting the piston 130 run up to speed over a few inches (e.g., 10"). Then, the time that the piston takes to move between two points can be precisely measured. Because the area of the pipe (e.g., flow tube, cylinder, etc.) is known, calculating the volumetric flow rate of the fluid requires multiplying the velocity by the area.

As indicated previously, current systems employ optical sensors that are very difficult to align on the prover. The characteristics of the approach herein render a much simpler cost effective approach in that that the piston 130 only travels in one axis and its velocity monotonically increases in a relatively predictable fashion.

Based on the foregoing, it can be appreciated that a number of embodiments are disclosed herein, preferred and alternative. For example, in one embodiment, a small volume prover apparatus 100 can include a precision bore cylinder having a flow inlet and a flow outlet 190. Such an apparatus 100 may also include a piston 130 maintained by and housed within the precision bore cylinder, the piston 130 configured with a flow-through valve arrangement that allows a fluid to pass from the flow inlet to the flow outlet 190 and through an annular passage when the piston 130 travels from a downstream position to an upstream position and determines a measure of flow rate of the fluid. Additionally, an accelerometer sensor 150 can be mounted to the piston 130. Such an accelerometer sensor 150 can continuously detect the velocity of the piston 130 by integrating acceleration data with respect to the amount of time the piston 130 moves between the upstream position and the downstream position, the velocity multiplied with respect to an area of a flow tube to calculate a volumetric flow rate of the fluid.

In another embodiment, a processor 180 can be employed, which receives at least two time pulse signals that correspond to the velocity measured by an integration of the acceleration data from the accelerometer sensor 150. In other embodiments, the processor 180 can calibrate the flow rate of the fluid utilizing a double chronometry pulse interpolation that provides a fractional meter pulse counting. In still other embodiments, a communications mode can be provided for communicating the acceleration data to the processor 180. In yet other embodiments, the accelerometer sensor 150 can be mounted to the piston 130 external to the flow of the fluid. In other embodiments, the accelerometer sensor 150 can be mounted to the piston 130 within the flow of the fluid. In another embodiment, a temperature monitoring and compensation algorithmic unit can be located within the accelerometer sensor 150 for monitoring a temperature compensation of thermal expansion of the bore cylinder as a result of fluid temperature.

In another embodiment, a small volume prover apparatus 100 can be implemented, which includes a precision bore cylinder having a flow inlet 110 and a flow outlet 190. In such an embodiment, the piston 130 can be maintained by and housed within the precision bore cylinder, the piston 130 configured with a flow-through valve arrangement that allows a fluid to pass from the flow inlet 110 to the flow outlet 190 and through an annular passage when the piston 130 travels from a downstream position to an upstream position and determines a measure of flow rate of the fluid. In such an embodiment, the accelerometer sensor 150 can be mounted to the piston 130 to continuously detect a velocity of the piston 130 by integrating acceleration data with respect to an amount time the piston 130 moves between the upstream position and the downstream position, the velocity multiplied with respect to an area of a flow tube to calculate a volumetric flow rate of the fluid. Such an embodiment can further include a processor 180 that communicates with the accelerometer sensor 150 and which receives at least two time pulse signals that correspond to the velocity measured by an integration of the acceleration data from the accelerometer sensor 150 to assist in calculating the volumetric flow rate of the fluid.

In other embodiments, a method for measuring a flow of fluid can be provided. Such a method can include the steps of passing fluid via an annular passage associated with a precision bore cylinder that houses a piston 130 in association with a valve arrangement when the piston 130 travels from a downstream position to an upstream position; continuously detecting an accurate position and a movement of the piston 130 utilizing an accelerometer sensor 150 that communicates with the piston 130; and accurately measuring a velocity of the piston 130 by integrating acceleration data with respect to an amount of time the piston 130 moves between the upstream position and the downstream position utilizing the accelerometer sensor 150 in order to thereafter calculate a volumetric flow rate of the fluid by multiplying the velocity with respect to an area of a flow tube.

In other embodiments, a step can be provided for transmitting at least two time pulse signals which correspond to the velocity measured by integration of the acceleration data from the accelerometer sensor 150 to a processor 180. In still other embodiments, a step can be provided for automatically calibrating the fluid flow via a processor 180 that processes a double chronometry pulse interpolation instructions that provide a fractional meter pulse counting. In yet other embodiments, a step can be provided for mounting the accelerometer sensor 150 on the piston 130 external to the flow of the fluid. In other embodiments, a step can be implemented for mounting the accelerometer sensor 150 on the piston 130 within the flow of the flow.

In still another embodiment, a step can be implemented for performing temperature compensation for thermal expansion of the bore cylinder as a result of fluid temperature via a temperature monitoring and compensation algorithmic unit located within the accelerometer sensor 150. In yet another embodiment, a step can be implemented for communicating the acceleration data to the processor 180 via a communications mode. In other embodiments, such a communication mode can be at least one of the following: a wired communications mode; a wireless communications mode; or an optical communication mode, or a combination thereof.

In other embodiments, a step can be provided for initiating a proving run via interaction with the processor 180 to pull the piston 130 into an upstream position and unlatch the piston 130 from a chain drive return mechanism. In another embodiment, a step can be provided for detecting the variation in the velocity of the flow of the fluid utilizing the accelerometer sensor 150 in order to verify flow measurement accuracy with respect to the flow of the fluid and provide an alarm signal if the velocity of the piston 130 varies as the piston 130 travels from the downstream position to the upstream position or from the upstream position to the downstream position.

In still other embodiments, steps can be provided for transmitting a pulse signal to the processor 180 to initiate a timing sequence when the accelerometer sensor 150 is actuated after the piston 130 has been released and synchronized with the flow of the fluid, and closing a flow-through valve within the piston 130 during a movement of the piston 130 from the upstream position to the downstream position. In yet another embodiment, steps can be provided for transmitting a second pulse signal to the processor 180 to terminate the timing sequence and opening the flow-through valve when the flow-through valve moves from the downstream position to the upstream position in order to permit the fluid to flow freely through the precision bore cylinder with an insignificant amount of pressure loss.

It will be appreciated that variations of the above-disclosed and other features and functions, or alternatives thereof, may be desirably combined into many other different systems or applications.

## Claims

1. A small volume prover apparatus (100), comprising:
a precision bore cylinder (120) having a flow inlet (110) and a flow outlet (190);
a piston (130) maintained by and housed within said precision bore cylinder (120), said piston (130) configured with a flow-through valve arrangement (140) that allows a fluid to pass from said flow inlet (110) to said flow outlet (190) and through an annular passage when said piston (130) travels from a downstream position to an upstream position and determines a measure of flow rate of said fluid; and
an accelerometer sensor (150) mounted to said piston (130) and which continuously detects a velocity of said piston (130) by integrating acceleration data with respect to an amount of time that said piston (130) moves between said upstream position and said downstream position, said velocity multiplied with respect to an area of a flow tube to calculate a volumetric flow rate of said fluid.

2. The apparatus of claim 1 further comprising a processor (180) that receives at least two time pulse signals that correspond to said velocity measured by an integration of said acceleration data from said accelerometer sensor (150).

3. The apparatus of claim 2 wherein said processor (180) calibrates said flow rate of said fluid utilizing a double chronometry pulse interpolation that provides a fractional meter pulse counting.

4. The apparatus of claim 1 further comprising:
a processor (180) that communicates with said accelerometer sensor (150); and
a communications mode for communicating said acceleration data to said processor (180).

5. The apparatus of claim 1 wherein said accelerometer sensor (150) is mounted to said piston (130) external to said flow of said fluid.

6. The small volume prover apparatus of claim 1 further comprising:
a processor (180) that communicates with said accelerometer sensor (150) and which receives at least two time pulse signals that correspond to said velocity measured by an integration of said acceleration data from said accelerometer sensor (150) to assist in calculating said volumetric flow rate of said fluid.

7. A method for measuring a flow of fluid, said method comprising:
passing fluid via an annular passage associated with a precision bore cylinder (120) that houses a piston (130) in association with a valve arrangement (140) when said piston (130) travels from a downstream position to an upstream position;
continuously detecting an accurate position and a movement of said piston (130) utilizing an accelerometer sensor (150) that communicates with said piston (130); and
accurately measuring a velocity of said piston (130) by integrating acceleration data with respect to an amount of time said piston (130) moves between said upstream position and said downstream position utilizing said accelerometer sensor (150), in order to thereafter calculate a volumetric flow rate of said fluid by multiplying said velocity with respect to an area of a flow tube.

8. The method of claim 7 further comprising transmitting at least two time pulse signals which correspond to said velocity measured by integration of said acceleration data from said accelerometer sensor (150) to a processor (180).

9. The method of claim 7 further comprising automatically calibrating said fluid flow via a processor (180) that processes a double chronometry pulse interpolation instructions that provide a fractional meter pulse counting.

## Patentansprüche

1. Prüfvorrichtung für kleine Volumen (100), die Folgendes umfasst:
einen Präzisionsbohrungszylinder (120) mit einem Strömungseinlass (110) und einem Strömungsauslass (190);
einen Kolben (130), der durch den Präzisionsbohrungszylinder (120) gehalten und in dem Präzisionsbohrungszylinder (120) aufgenommen ist, wobei der Kolben (130) mit einer Durchflussventilanordnung (140) konfiguriert ist, die es einem Fluid erlaubt, von dem Strömungseinlass (110) zu dem Strömungsauslass (190) und durch einen ringförmigen Durchgang zu gelangen, wenn sich der Kolben (130) von einer stromabwärtigen Position zu einer stromaufwärtigen Position bewegt, und ein Maß der Strömungsrate des Fluids bestimmt; und
einen Beschleunigungsmessersensor (150), der an dem Kolben (130) montiert ist und der kontinuierlich eine Geschwindigkeit des Kolbens (130) durch Integrieren von Beschleunigungsdaten mit Bezug auf eine Zeitdauer, die sich der Kolben (130) zwischen der stromaufwärtigen Position und der stromabwärtigen Position bewegt, detektiert, wobei die Geschwindigkeit mit Bezug auf eine Fläche eines Strömungsrohres multipliziert wird, um eine volumetrische Strömungsrate des Fluids zu berechnen.

2. Vorrichtung nach Anspruch 1, die des Weiteren einen Prozessor (180) umfasst, der mindestens zwei Zeitimpulssignale empfängt, die der Geschwindigkeit entsprechen, die durch eine Integration der Beschleunigungsdaten von dem Beschleunigungsmessersensor (150) gemessen wurde.

3. Vorrichtung nach Anspruch 2, wobei der Prozessor (180) die Strömungsrate des Fluids mittels einer Doppel-Chronometrie-Impuls-Interpolation kalibriert, die eine Meterbruchteil-Impulszählung bereitstellt.

4. Vorrichtung nach Anspruch 1, die des Weiteren Folgendes umfasst:
einen Prozessor (180), der mit dem Beschleunigungsmessersensor (150) kommuniziert; und
einen Kommunikationsmodus zum Übermitteln der Beschleunigungsdaten an den Prozessor (180).

5. Vorrichtung nach Anspruch 1, wobei der Beschleunigungsmessersensor (150) an dem Kolben (130) außerhalb der Fluidströmung montiert ist.

6. Prüfvorrichtung für kleine Volumen nach Anspruch 1, die des Weiteren Folgendes umfasst:
einen Prozessor (180), der mit dem Beschleunigungsmessersensor (150) kommuniziert und der mindestens zwei Zeitimpulssignale empfängt, die der Geschwindigkeit entsprechen, die durch eine Integration der Beschleunigungsdaten von dem Beschleunigungsmessersensor (150) gemessen wurde, um das Berechnen der volumetrischen Strömungsrate des Fluids zu unterstützen.

7. Verfahren zum Messen einer Fluidströmung, wobei das Verfahren Folgendes umfasst:
Leiten von Fluid durch einen ringförmigen Durchgang, der einem Präzisionsbohrungszylinder (120) zugeordnet ist, der einen Kolben (130) in Verbindung mit einer Ventilanordnung (140) aufnimmt, wenn sich der Kolben (130) von einer stromabwärtigen Position zu einer stromaufwärtigen Position bewegt;
kontinuierliches Detektieren einer genauen Position und einer Bewegung des Kolbens (130) mittels eines Beschleunigungsmessersensor (150), der mit dem Kolben (130) kommuniziert; und
präzises Messen einer Geschwindigkeit des Kolbens (130) durch Integrieren von Beschleunigungsdaten mit Bezug auf eine Zeitdauer, die sich der Kolben (130) zwischen der stromaufwärtigen Position und der stromabwärtigen Position bewegt, unter Verwendung des Beschleunigungsmessersensors (150), um anschließend eine volumetrische Strömungsrate des Fluids durch Multiplizieren der Geschwindigkeit mit Bezug auf eine Fläche eines Strömungsrohres zu berechnen.

8. Verfahren nach Anspruch 7, das des Weiteren umfasst, mindestens zwei Zeitimpulssignale, die der Geschwindigkeit entsprechen, die durch Integration der Beschleunigungsdaten von dem Beschleunigungsmessersensor (150) gemessen wurde, an einen Prozessor (180) zu senden.

9. Verfahren nach Anspruch 7, das des Weiteren umfasst, die Fluidströmung automatisch mittels eines Prozessors (180) zu kalibrieren, der Doppel-Chronometrie-Impuls-Interpolationsanweisungen verarbeitet, die eine Meterbruchteil-Impulszählung bereitstellen.

## Revendications

1. Appareil de vérification de faible volume (100) comprenant :
- un cylindre à alésage de précision (120) comprenant une entrée de flux (110) et une sortie de flux (190) ;
- un piston (130) maintenu par et logé dans le cylindre à alésage de précision (120), lequel piston (130) comprend un système de valve à écoulement traversant (140) permettant à un fluide de passer de l'entrée de flux (110) vers la sortie de flux (190) et à travers un passage annulaire lorsque le piston (130) se déplace depuis une position aval vers une position amont, et déterminant une mesure de débit du fluide ; et
- un capteur à accéléromètre (150) monté sur le piston (130) qui détecte en continu la vitesse du piston (130) en intégrant des données d'accélération par rapport à la quantité de temps que le piston (130) prend pour se déplacer entre la position amont et la position aval, la vitesse étant multipliée par rapport à une zone d'un tube d'écoulement pour calculer un débit volumétrique du fluide.

2. Appareil selon la revendication 1, comprenant en outre un processeur (180) qui reçoit au moins deux signaux d'impulsion temporelle qui correspondent à la vitesse mesurée par l'intégration de données d'accélération provenant du capteur à accéléromètre (150).

3. Appareil selon la revendication 2, dans lequel le processeur (180) étalonne le débit de fluide en utilisant une interpolation d'impulsions de chronométrie double qui fournit un décompte d'impulsions métrique fractionnel.

4. Appareil selon la revendication 1, comprenant en outre :
- un processeur (180) qui communique avec le capteur à accéléromètre (150) ; et
- un mode de communication pour communiquer les données d'accélération au processeur (180).

5. Appareil selon la revendication 1, dans lequel le capteur à accéléromètre (150) est monté sur le piston (130) à l'extérieur du flux de fluide.

6. Appareil de vérification de faible volume selon la revendication 1, comprenant en outre un processeur (180) qui communique avec le capteur à accéléromètre (150) et qui reçoit au moins deux signaux d'impulsion temporelle qui correspondent à la vitesse mesurée par l'intégration des données d'accélération provenant du capteur à accéléromètre (150) afin de faciliter le calcul du débit volumétrique de fluide.

7. Procédé de mesure d'un flux de fluide, consistant à :
- faire passer un fluide dans un passage annulaire associé à un cylindre à alésage de précision (120) qui renferme un piston (130) associé à un système de valve (140) lorsque le piston (130) se déplace d'une position aval vers une position amont ;
- détecter en continu une position précise et un déplacement du piston (130) en utilisant un capteur à accéléromètre (150) qui communique avec le piston (130) ; et
- mesurer avec précision la vitesse du piston (130) en intégrant des données d'accélération par rapport à la quantité de temps que le piston (130) prend pour se déplacer entre la position amont et la position aval en utilisant le capteur à accéléromètre (150), afin de calculer ensuite un débit volumétrique du fluide en multipliant la vitesse par rapport à une zone du tube d'écoulement.

8. Procédé selon la revendication 7, consistant en outre à transmettre deux signaux d'impulsion temporelle correspondant à la vitesse mesurée par l'intégration des données d'accélération provenant du capteur à accéléromètre (150) vers un processeur (180).

9. Procédé selon la revendication 7, consistant en outre à étalonner automatiquement le flux de fluide via un processeur (180) qui traite des instructions d'interpolation d'impulsions de chronométrie double fournissant un décompte d'impulsions métrique fractionnel.
